# FASCICULE DE BREVET EUROPEEN

(11) **EP 2 147 889 B1**
(45) Date de publication et mention de la délivrance du brevet: **15.08.2012**
(21) Numéro de dépôt: 09305704.0
(22) Date de dépôt: 24.07.2009
(51) Int. Cl.: B66F 7/22, B25H 1/00

(54) **Dispositif de levage d'un véhicule de type kart ou analogue**
Hebevorrichtung für Fahrzeuge, insbesondere Go Kart
Lifting device for vehicles, in particular Go Kart

(30) Priorité: 24.07.2008 FR 0804207
(43) Date de publication de la demande: 27.01.2010
(73) Titulaire: "A M K Systems" Auto Moto Kart Systems, 31240 Saint Jean (FR)
(72) Inventeur: Aubourg, Alain, 31240 Saint Jean (FR)
(74) Mandataire: Morelle, Guy Georges Alain

(56) Documents cités:
- DE-U1- 9 202 049
- FR-A- 2 241 486
- US-A1- 2004 108 494
- US-A1- 2005 220 583

## Description

La présente invention se rapporte au domaine des dispositifs de levage de véhicules, notamment de véhicules de type kart ou analogue, plus particulièrement à un dispositif de levage comportant :
- une première plate-forme rigide dotée de moyens de roulement lui permettant de rouler sur le sol,
- une deuxième plate-forme rigide destinée à entrer en contact avec ledit véhicule de type kart ou analogue, et dotée de moyens de prise de ce dernier en vue de permettre son levage au-dessus du sol,
- des moyens de liaison cinématique entre les deuxième et première plates-formes rigides, de telle sorte que la deuxième plate-forme rigide puisse se déplacer entre deux positions extrêmes par rapport à la première plate-forme rigide :

- une première position, dite de prise du véhicule, dans laquelle la deuxième plate-forme rigide est disposée sensiblement à la verticale, et
- une deuxième position, dite de levage du véhicule, dans laquelle la deuxième plate-forme rigide est disposée au-dessus du sol et de la première plate-forme rigide.

L'art antérieur enseigne un tel dispositif : la deuxième plate-forme ou plateau pivotant est liée à la première plate-forme ou plateau roulant, par une liaison à un degré de liberté en rotation, conférant à la deuxième plate-forme une possibilité de rotation autour d'un axe de rotation, par rapport à la première plate-forme qui est en appui sur le sol via des moyens de roulements. Lorsqu'il s'agit de lever un véhicule de type kart au-dessus du sol grâce à un tel dispositif de levage, par exemple pour une opération de maintenance ou une réparation, le véhicule de type kart est d'abord dressé à la verticale ; la deuxième plate-forme du dispositif de levage est placée en position verticale de prise du véhicule, puis amenée au contact du châssis de ce dernier en faisant rouler le dispositif sur le sol. Dans cette position verticale, le véhicule est lié à la deuxième plate-forme par une liaison libérable, puis cette deuxième plate-forme est pivotée, par un opérateur, avec le véhicule ainsi attaché, autour de son axe de rotation afin de la placer en position horizontale au-dessus de la première plate-forme et au-dessus du sol, de telle sorte que le centre de gravité de l'ensemble passe par la base de sustentation définie par la première plate-forme et ses moyens de roulement ; la deuxième plate-forme est ensuite immobilisée dans cette position horizontale, par une sauterelle de verrouillage, afin que l'opérateur puisse se libérer et intervenir sur le véhicule.

Un tel dispositif de levage présente l'inconvénient principal suivant : le centre de gravité de l'ensemble mobile constitué par la plate-forme pivotante et le véhicule lié à celle-ci, décrit une trajectoire en arc de cercle pour passer de la position verticale de prise du véhicule à la position d'élévation horizontale ou sensiblement horizontale ; on constate que l'opérateur doit fournir un effort important au départ du mouvement pour enclencher la rotation de l'ensemble mobile, dans une position inconfortable, pouvant entraîner la présence de deux opérateurs pour la manoeuvre : en effet, le déposant a constaté que le centre de gravité avec un tel dispositif selon l'art antérieur s'élève presque verticalement au départ du mouvement, ceci étant dû à la forme de la trajectoire sensiblement en quart de cercle du centre de gravité. En outre, en raison de sa structure, un tel dispositif de levage selon l'art antérieur ne possède pas une grande rigidité.

On connaît en outre le document US 2005/0220583 qui se rapporte à un dispositif de plateforme de travail inclinable possédant une base et une plateforme de travail mobile. La plateforme de travail mobile est reliée à la base par au moins un bras pivotant. Un dispositif de soulèvement est configuré pour déplacer, par exemple, relever et incliner, la plateforme de travail par rapport à la base. Dans un mode de réalisation particulier, la plateforme de travail est reliée à la base par une pluralité de bras pivotants qui sont articulés sur la base et sur la plateforme de travail. Dans un mode de réalisation, le dispositif de soulèvement est un sac pneumatique de soulèvement disposé entre la base et la plateforme de travail.

On connaît en outre le document US 2004/0108494 qui se rapporte à un dispositif de levage de véhicule à faible garde au sol comme un kart par exemple, qui élève le véhicule au-dessus du sol pour une intervention mécanique plus aisée sur celui-ci. Le dispositif qui est monté sur quatre roues, deux roues avants et deux roues arrières, comporte un mécanisme de soulèvement du véhicule à quatre barres de type parallélogramme déformable, glissé sous le châssis du véhicule en position affaissée en vue d'élever ce dernier. Un système de liaison multiple guidé par le mécanisme de soulèvement à quatre barres, fait coulisser un chariot muni des roues avants, vers l'avant, le long des barres inférieures, simultanément au soulèvement du véhicule mais après que ce dernier ait été élevé suffisamment au-dessus du sol pour que les roues avants puissent se glisser sous le véhicule. En position affaissée du dispositif de levage, le chariot muni des roues avants ne pourrait en effet être inséré sous le véhicule à faible garde au sol. Accouplées avec la paire de roues arrières, ces roues avants permettent au dispositif de levage de rouler facilement dans la zone de travail.

La présente invention se propose essentiellement de pallier ces inconvénients. Plus précisément, elle consiste en un dispositif de levage tel que défini dans le domaine d'application ci-dessus, tel que lesdits moyens de liaison cinématique comprennent :
- une première bielle de liaison entre les première et deuxième plates-formes rigides, une première extrémité de la première bielle étant articulée sur la première plate-forme rigide, la deuxième extrémité de la première bielle, opposée à la première extrémité de celle-ci, étant articulée sur la deuxième plate-forme rigide,
- une deuxième bielle de liaison entre les première et deuxième plates-formes rigides, une première extrémité de la deuxième bielle étant articulée sur la première plate-forme rigide, la deuxième extrémité de la deuxième bielle, opposée à la première extrémité de celle-ci, étant articulée sur la deuxième plate-forme rigide, caractérisé en ce que
- les premières extrémités des première et deuxième bielles sont articulées à distance l'une de l'autre sur la première plate-forme rigide, et en ce que les deuxièmes extrémités des première et deuxième bielles sont articulées à distance l'une de l'autre sur la deuxième plate-forme rigide de telle sorte que, dans la deuxième position de cette dernière, ou position de levage, les première et deuxième bielles se croisent.

La liaison cinématique entre les première et deuxième plates-formes, au moyen de deux bielles articulées permet de modifier la répartition des efforts nécessaires au passage de la deuxième plate-forme, de sa position verticale à une position d'élévation, par exemple horizontale ou sensiblement horizontale, en sorte que les efforts au départ du mouvement de l'ensemble mobile, à partir de la position verticale, qui est la plus inconfortable pour l'opérateur, ne soient pas les plus importants à fournir durant le déplacement complet de cet ensemble mobile. La liaison cinématique telle que définie dans le dispositif selon l'invention offre une linéarité des efforts durant tout le déplacement de l'ensemble mobile, contrairement au dispositif de l'art antérieur, et assure la possibilité de manoeuvre du dispositif par une seule personne.

Selon une caractéristique avantageuse,
- la première bielle est articulée sur les première et deuxième plates-formes rigides respectivement par une première et une deuxième liaisons à un degré de liberté en rotation chacune, et
- la deuxième bielle est articulée sur les première et deuxième plates-formes rigides respectivement par une première et une deuxième liaisons à un degré de liberté en rotation chacune.

Cette caractéristique confère une grande rigidité à l'ensemble du dispositif de levage, la plate-forme mobile étant liée à la plate-forme roulante par quatre liaisons à un degré de liberté en rotation chacune.

Selon une caractéristique avantageuse,
- les premières extrémités des première et deuxième bielles sont liées à la première plate-forme rigide, respectivement dans des zones d'extrémités opposées de celle-ci, proches des moyens de roulement, et
- les deuxièmes extrémités des première et deuxième bielles sont liées à la deuxième plate-forme rigide, respectivement dans des zones d'extrémités opposées de celle-ci.

Cette caractéristique offre une grande stabilité du dispositif de levage selon l'invention, et évite en outre un trop gros effort au démarrage du mouvement de la plate-forme mobile en vue de la mettre en position horizontale ou sensiblement horizontale, la plate-forme mobile effectuant un mouvement tel, que le centre de gravité de l'ensemble mobile ne monte pratiquement pas, l'extrémité supérieure de la deuxième bielle effectuant un mouvement descendant, à partir de la position verticale de la deuxième plate-forme et pour placer cette dernière en position élevée, par exemple horizontale ou sensiblement horizontale.

Selon une caractéristique avantageuse, le dispositif de levage selon l'invention comprend des axes d'articulation respectifs parallèles pour les liaisons à un degré de liberté en rotation chacune, entre les première et deuxième bielles d'une part, et les première et deuxième plates-formes rigides d'autre part.

Cette caractéristique confère à la plate-forme mobile, pour un point donné de celle-ci, un mouvement du point dans un plan perpendiculaire aux axes d'articulation.

Selon une caractéristique avantageuse, la deuxième plate-forme comprend :
- une première partie rigide articulée sur la deuxième extrémité de la première bielle,
- une deuxième partie rigide adoptant la forme d'un bras articulé intermédiaire dont une première extrémité est articulée sur ladite première partie rigide, à distance de l'articulation entre cette première partie rigide et la deuxième extrémité de la première bielle, la deuxième extrémité de la deuxième bielle étant articulée sur ledit bras intermédiaire, la deuxième extrémité de ce dernier, opposée à la première extrémité de celui-ci, étant dotée d'un moyen de manoeuvre,
- de telle sorte que le bras intermédiaire puisse se déplacer entre les deux positions extrêmes suivantes :
   - une première position, dite position de repos, dans laquelle le bras intermédiaire est sensiblement disposé dans le plan de la première partie rigide de la deuxième plate-forme,
   - une deuxième position, dite position active, dans laquelle le bras intermédiaire forme un angle avec la première partie rigide de la deuxième plate-forme,
   - le déplacement du bras intermédiaire de la position de repos à la position active entraînant une élévation de la deuxième plate-forme par rapport à la première plate-forme.

Cette caractéristique offre au dispositif de levage selon l'invention, lorsque la plate-forme mobile est par exemple en position horizontale ou sensiblement horizontale au-dessus de la plate-forme roulante, une possibilité de surélévation de cette plate-forme mobile en manoeuvrant le bras articulé intermédiaire, comme cela sera expliqué plus en détail avec la description d'un exemple de mode de réalisation de l'invention.

Selon une caractéristique avantageuse,
- la première partie rigide est liée à la deuxième extrémité de la première bielle par une liaison à un degré de liberté en rotation,
- le bras rigide articulé intermédiaire est lié par sa première extrémité à ladite première partie rigide, par une liaison à un degré de liberté en rotation, la deuxième extrémité de la deuxième bielle étant liée au bras articulé intermédiaire par une liaison à un degré de liberté en rotation.

Selon cette caractéristique, le bras intermédiaire adopte un mouvement de rotation par rapport à la première partie rigide de la deuxième plate-forme, ainsi que par rapport à la deuxième bielle, conférant une bonne rigidité à l'ensemble.

Selon une caractéristique avantageuse, la première extrémité du bras articulé intermédiaire, est articulée sur la première partie rigide dans une zone proche de l'articulation entre la première partie rigide et la deuxième extrémité de la première bielle, la deuxième extrémité de la deuxième bielle étant articulée sur le bras intermédiaire dans une zone médiane de celui-ci.

Cette caractéristique permet, en fonction de la distance séparant les deux articulations du bras intermédiaire, de définir une valeur de surélévation de la deuxième plate-forme grâce à la manoeuvre du bras intermédiaire.

Selon une caractéristique avantageuse, le dispositif de levage selon l'invention comprend des axes d'articulation respectifs parallèles pour les liaisons à un degré de liberté en rotation, entre le bras articulé intermédiaire et la première partie rigide de la deuxième plate-forme d'une part, et entre la deuxième extrémité de la deuxième bielle et le bras articulé intermédiaire d'autre part.

Cette caractéristique confère au bras articulé intermédiaire, pour un point donné de celui-ci, un mouvement du point dans un plan perpendiculaire aux axes d'articulation. Lorsque les axes d'articulation du bras intermédiaire sont parallèles à ceux des bielles, les points des éléments de l'ensemble mobile du dispositif par rapport à la première plate-forme se déplacent tous dans des plans perpendiculaires aux axes d'articulation.

Selon une caractéristique avantageuse, le dispositif de levage selon l'invention comporte des moyens de liaison libérable de la deuxième extrémité du bras articulé intermédiaire à la première plate-forme.

Cette caractéristique permet de bloquer la deuxième plate-forme grâce au bras intermédiaire.

Selon une caractéristique avantageuse, le dispositif de levage selon l'invention comporte des moyens de libération de l'une des liaisons articulées des extrémités des première ou deuxième bielles à la première ou deuxième plate-forme, permettant une libération de cette liaison en vue d'un alignement des première et deuxième plates-formes sensiblement dans un même plan.

Cette caractéristique permet un encombrement réduit du dispositif de levage selon l'invention, lorsqu'il n'est pas utilisé, par exemple pour en faciliter le transport ou le rangement.

Selon une caractéristique avantageuse, le dispositif de levage selon l'invention comporte des moyens de blocage du déplacement de la deuxième plate-forme par rapport à la première plate-forme, dans une position quelconque de la deuxième plate-forme par rapport à la première plate-forme, comprise entre la position de prise et la position de levage du véhicule.

Cette caractéristique offre la possibilité de bloquer la deuxième plate-forme dans une position choisie par l'opérateur, par rapport à la première plate-forme, par exemple pour placer le véhicule dans une position particulière en fonction de l'intervention que l'opérateur doit réaliser.

Selon une caractéristique avantageuse, lesdits moyens de blocage comprennent :
- des moyens de vérin dont une première extrémité est articulée sur l'un des éléments suivants : première plate-forme, deuxième plate-forme, première bielle, ou deuxième bielle, et dont la deuxième extrémité opposée à la première est articulée sur l'un desdits éléments ci-dessus différent de celui sur lequel est articulée la première extrémité du vérin.
- une vanne d'immobilisation de la tige du vérin.

Selon une caractéristique avantageuse, le dispositif de levage selon l'invention comprend des moyens de commande de ladite vanne d'immobilisation, disposés sur la poignée de manoeuvre du bras articulé intermédiaire.

Cette caractéristique offre une ergonomie très appropriée en ce que l'opérateur peut, avec le même moyen de manoeuvre, déplacer le véhicule en surélevant la deuxième plate-forme au moyen du bras intermédiaire, et bloquer cette deuxième plate-forme dans la position voulue au moyen d'un organe de commande placé sur la même poignée de manoeuvre.

Selon une caractéristique avantageuse, les première et deuxième plates-formes, les première et deuxième bielles au moins, adoptent des structures tubulaires.

Cette caractéristique confère au dispositif de levage selon l'invention un faible poids autorisant des manipulations de celui-ci aisées et possibles avec un seul opérateur.

Selon une caractéristique avantageuse, lesdits moyens de roulement de la première plate-forme rigide comprennent :
- une première roue disposée à une première extrémité de la première plate-forme rigide,
- une deuxième roue disposée à une deuxième extrémité de la première plate-forme rigide, opposée à la première extrémité, et
- au moins une troisième roue, disposée à l'une des première ou deuxième extrémité de la première plate-forme rigide,
- la ou les roues disposées à l'une ou l'autre des deux extrémités de la première plate-forme rigide étant directionnelle.

Selon une caractéristique avantageuse, les moyens de roulement comportent quatre roues dont deux directionnelles.

Selon une caractéristique avantageuse, la deuxième plate-forme adopte une forme en H.

Selon une caractéristique avantageuse, les moyens de prise du véhicule comporte au moins une attache de type clip.

D'autres caractéristiques et avantages apparaîtront à la lecture qui suit d'un exemple de mode de réalisation d'un dispositif de levage selon l'invention, accompagnée des dessins annexés, exemple donné à titre illustratif non limitatif.
La figure 1 représente une vue en perspective d'un exemple de mode de réalisation d'un dispositif de levage selon l'invention, dans une position de transport ou de rangement de celui-ci.
La figure 2 représente une vue en perspective de l'exemple de la figure 1, dans une position de prise d'un véhicule de type kart ou analogue (non représenté).
La figure 3 représente une vue latérale de l'exemple de la figure 1 dans la position de la figure 2.
La figure 4 représente une vue en perspective de l'exemple de la figure 1, dans une position de levage d'un véhicule de type kart ou analogue (non représenté).
La figure 5 représente une vue latérale de l'exemple de la figure 1 dans la position de la figure 4.
La figure 6 représente une vue en perspective de l'exemple de la figure 1, dans une position de surélévation d'un véhicule de type kart ou analogue (non représenté), au moyen d'un bras rigide articulé intermédiaire.
La figure 7 représente une vue latérale de l'exemple de la figure 1 dans la position de la figure 6.
La figure 8 représente une vue de bout de l'exemple de la figure 1 dans la position de la figure 6.

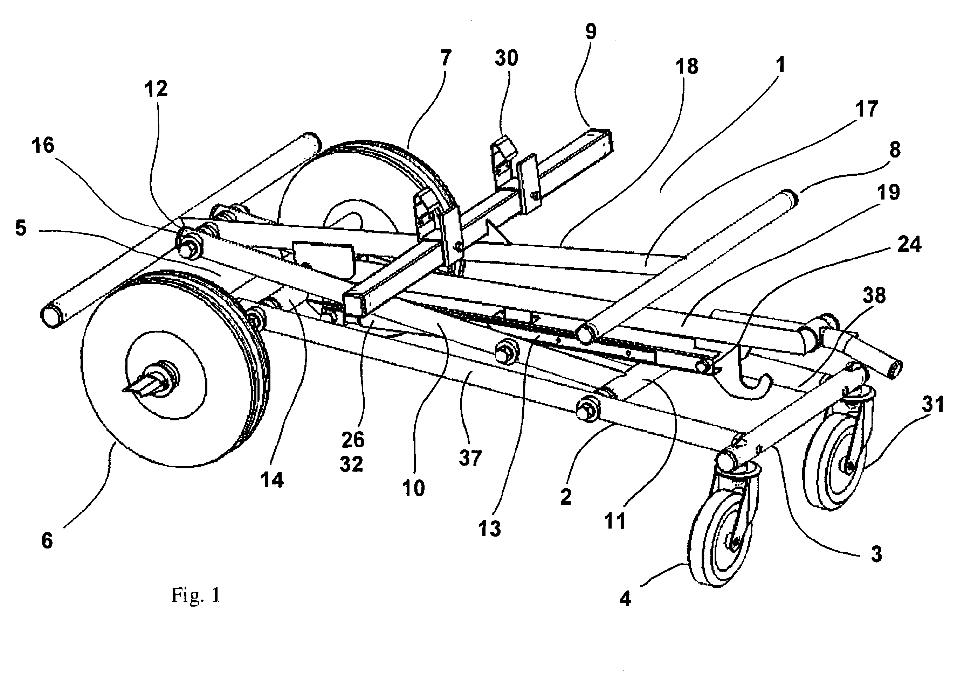

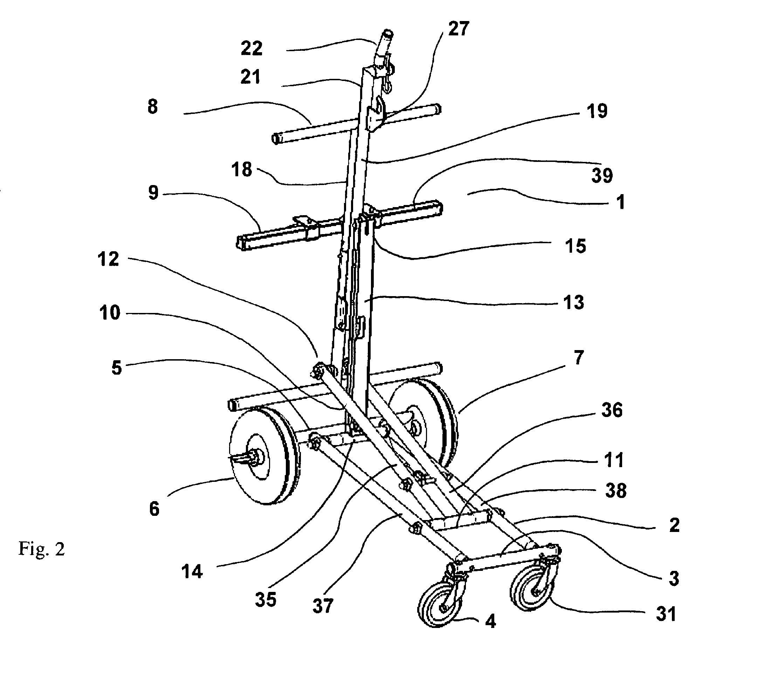

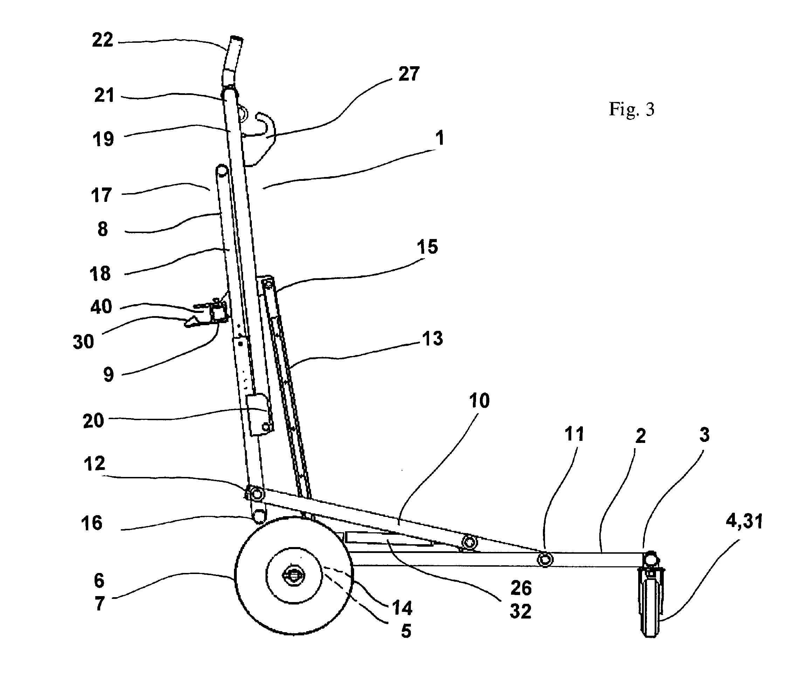

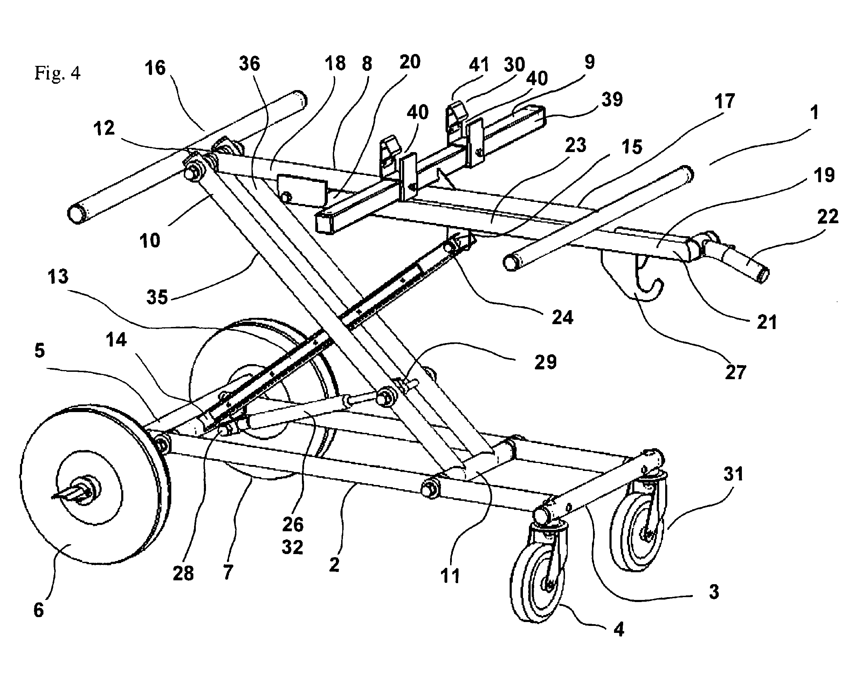

Le dispositif 1 de levage représenté sur les figures 1 à 8 selon diverses positions de fonctionnement ou de rangement et stockage, est plus particulièrement destiné à un véhicule de type kart ou analogue (non représenté), et comprend :
- une première 2 plate-forme rigide dotée de moyens 4, 6, 7 de roulement lui permettant de rouler sur le sol,
- une deuxième 8 plate-forme rigide destinée à entrer en contact avec le véhicule de type kart ou analogue, et dotée de moyens 9 de prise de ce dernier en vue de permettre son levage au-dessus du sol comme représenté sur les figures 4 à 8,
- des moyens de liaison cinématique 10, 13 entre les deuxième 8 et première 2 plates-formes rigides, de telle sorte que la deuxième 8 plate-forme rigide puisse se déplacer entre deux positions extrêmes par rapport à la première 2 plate-forme rigide, comme suit :
   - une première position, dite de prise du véhicule, comme représenté sur les figures 2 et 3, dans laquelle la deuxième 8 plate-forme rigide est disposée sensiblement à la verticale, et
   - une deuxième position, dite de levage du véhicule, comme représenté sur les figures 4 à 8, dans laquelle la deuxième 8 plate-forme rigide est disposée au-dessus du sol et de la première 2 plate-forme rigide, par exemple en position horizontale ou sensiblement à l'horizontale, mais également en position inclinée vers l'avant ou vers l'arrière selon les besoins,
      les moyens de liaison cinématique comprenant :
      - une première 10 bielle de liaison entre les première 2 et deuxième 8 plates-formes rigides, une première 11 extrémité de la première bielle 10 étant articulée sur la première 2 plate-forme rigide, la deuxième 12 extrémité de la première bielle 10, opposée à la première 11 extrémité de celle-ci, étant articulée sur la deuxième 8 plate-forme rigide,
      - une deuxième 13 bielle de liaison entre les première 2 et deuxième 8 plates-formes rigides, une première 14 extrémité de la deuxième bielle 13 étant articulée sur la première 2 plate-forme rigide, la deuxième 15 extrémité de la deuxième bielle 13, opposée à la première 14 extrémité de celle-ci, étant articulée sur la deuxième 8 plate-forme rigide,
      - les premières 11, 14 extrémités des première 10 et deuxième 13 bielles étant articulées à distance l'une de l'autre sur la première 2 plate-forme rigide, et les deuxièmes 12, 15 extrémités des première 10 et deuxième 13 bielles étant articulées à distance l'une de l'autre sur la deuxième 8 plate-forme rigide de telle sorte que, dans la deuxième position de cette dernière, ou position de levage, les première 10 et deuxième 13 bielles se croisent, comme plus particulièrement représenté sur les figures 4 à 7.

Dans l'exemple représenté, les première 10 et deuxième 13 bielles sont avantageusement respectivement articulées sur les première 2 et deuxième 8 plates-formes rigides, chacune par une première et une deuxième liaisons à un degré de liberté en rotation.

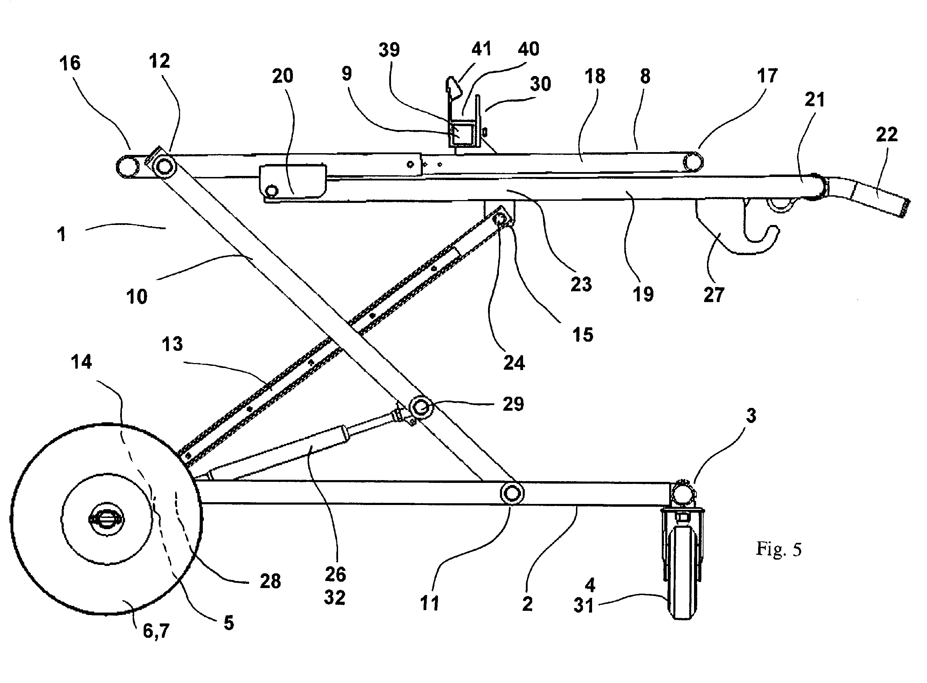

Comme plus particulièrement représenté sur les figures 4 et 5,
- les premières 11, 14 extrémités des première 10 et deuxième 13 bielles sont liées à la première 2 plate-forme rigide, respectivement dans des zones d'extrémités 3, 5 opposées de celle-ci, proches des moyens de roulement, et
- les deuxièmes 12, 15 extrémités des première 10 et deuxième 13 bielles sont liées à la deuxième 8 plate-forme rigide, respectivement dans des zones d'extrémités 16, 17 opposées de celle-ci.

Il est à noter les bielles 10, 13 peuvent ne pas être articulées exactement dans la zone d'extrémité 3, 5 et 16, 17 de la plate-forme 2, 8 considérée, comme cela apparaît sur les figures à l'égard de la première 11 extrémité de la première bielle 10, et de la deuxième 15 extrémité de la deuxième bielle 8, qui sont articulées en retrait de l'extrémité des plates-formes 2 et 8 correspondantes à l'intérieur de la base de sustentation définie par les moyens de roulements en contact avec le sol. Il est préférable que les extrémités 12, 14 des bielles 10, 13 soient très proches des extrémités des plates-formes 2, 8 du côté où les extrémités des plates-formes sont proches lorsque la deuxième 8 plate-forme est en position verticale, afin de permettre cette position verticale, en sorte que les plates-formes 8 et 10 forment sensiblement un angle droit dans cette position, comme représenté sur la figure 3. Le retrait des bielles par rapport à l'extrémité éloignée des plates-formes lorsque la deuxième 8 plate-forme est en position verticale peut être défini par la hauteur d'élévation que l'on souhaite obtenir par rapport à la longueur de la plate-forme, elle-même définie par le ou les véhicules que le dispositif 1 doit être apte à lever.

Les première 2 et deuxième 8 plates-formes, les première 10 et deuxième 13 bielles au moins, adopteront avantageusement des structures tubulaires métalliques, par exemple en acier, par exemple à section circulaire, afin de réduire le poids du dispositif 1 tout en conférant un bon module d'inertie aux éléments constitutifs de la structure résistante du dispositif.

Les moyens de roulement de la première 2 plate-forme rigide comprennent avantageusement :
- une première 4 et de préférence une quatrième 31 roues, directionnelles, disposées à une première 3 extrémité de la première 2 plate-forme rigide,
- une deuxième 6 et une troisième 7 roues, non directionnelles, disposées à une deuxième 5 extrémité de la première 2 plate-forme rigide, opposée à la première 3 extrémité.

La première 2 plate-forme rigide ou plateau peut adopter une structure tubulaire rectangulaire rigide formant châssis, par exemple mécano-soudée, les quatre roues 6, 7, 4, 31 étant respectivement disposées aux quatre angles de la structure rectangulaire, comme représenté sur les figures. La structure-châssis sera de préférence prévue pour rouler sur le sol dans une direction parallèle à la grande longueur de la structure rectangulaire, et à cet effet les axes de rotation des deux roues 6, 7 non directionnelles seront parallèles au petit côté de la structure rectangulaire. Les roues 6, 7, non directionnelles, seront de préférence disposées à l'extrémité de la plate-forme 2 se trouvant très proche de l'extrémité de la deuxième plate-forme lorsque cette dernière est en position verticale, comme représenté sur la figure 2, et seront en outre de diamètre plus élevé et plus résistante que les roues directionnelles 4, 31, étant plus en charge que ces dernières lors du mouvement de la plate-forme mobile 8.

Les dimensions et l'agencement des roues seront définis de préférence de telle sorte que la structure rectangulaire soit parallèle à la surface sur laquelle elle est destinée à rouler.

Les première 10 et deuxième 13 bielles pourront être respectivement articulées avec des articulations du type en chape sur la structure rectangulaire, entre les deux tubes longitudinaux 37, 38 formant la structure rectangulaire de la plate-forme 2, comme représenté plus particulièrement sur la figure 2, avec des axes d'articulation parallèles aux petits côtés de la structure rectangulaire. L'extrémité inférieure 14 de la deuxième 13 bielle sera de préférence articulée dans une zone très proche du tube transversal constituant l'extrémité 5 de la structure rectangulaire, comme représenté sur les figures.

La première bielle 10 pourra avantageusement être constituée de deux barres 35, 36 parallèles, afin d'augmenter sa résistance, par exemple tubulaire de section transversale circulaire, les extrémités des deux barres 35, 36 articulées sur la plate-forme 2 étant disposées respectivement proches des deux barres longitudinales 37, 38 comme représenté sur la figure 2 par exemple, en vue de réduire le porte-à-faux.

La deuxième bielle 13 pourra avantageusement être constituée d'une barre unique, disposée entre les deux barres 35, 36 de la première bielle 10, et comportant une section renforcée appropriée à une bonne résistance au flambage, par exemple une section rectangulaire tubulaire, une section en I, en U, en H ou analogue, éventuellement renforcée par les plaques latérales, l'extrémité 14 de la barre unique articulée sur la plate-forme 2 étant disposée à égales distances des deux barres longitudinales 37, 38, comme représenté sur la figure 2 par exemple.

Les première 10 et deuxième 13 bielles peuvent être de longueurs égales ou sensiblement égales, et se déplacent dans des plans parallèles entre eux et perpendiculaires au plan formé par la structure rectangulaire de la plate-forme 8 elle-même avantageusement disposée parallèlement au sol.

La deuxième 8 plate-forme rigide ou plateau destinée à entrer en contact avec le véhicule de type kart ou analogue, peut adopter une structure tubulaire rigide en forme de H, la barre centrale du H étant disposée parallèlement aux barres longitudinales 37, 38 de la plate-forme 2. La structure en H permet d'offrir de l'espace libre d'accès au véhicule, les deux barres transversales du H étant prévues pour assurer un équilibre au moins isostatique du véhicule, dans des zones correspondant aux deux extrémités longitudinales de celui-ci. La structure en H de la plate-forme 8 peut être rendue télescopique au niveau de la barre longitudinale de celle-ci qui peut être constituée de deux barres ajustées glissant l'une dans l'autre, en vue d'offrir une longueur du H variable pour permettre une adaptation de la structure en H à la longueur du véhicule à lever. Le blocage des deux barres télescopiques du H, l'une par rapport l'autre, dans une position déterminée, peut se faire au moyen d'une goupille ou analogue par exemple.

L'extrémité 12 de la première bielle 10 est articulée dans une zone du H proche de la barre transversale du H qui est voisine de l'extrémité 5 de la plate-forme 2 lorsque la plate-forme 8 est en position verticale ou sensiblement verticale. À cet effet, les deux barres 35, 36, de la première bielle 10 sont respectivement articulées en porte-à-faux de part et d'autre de la barre longitudinale du H, comme représenté par exemple sur la figure 2.

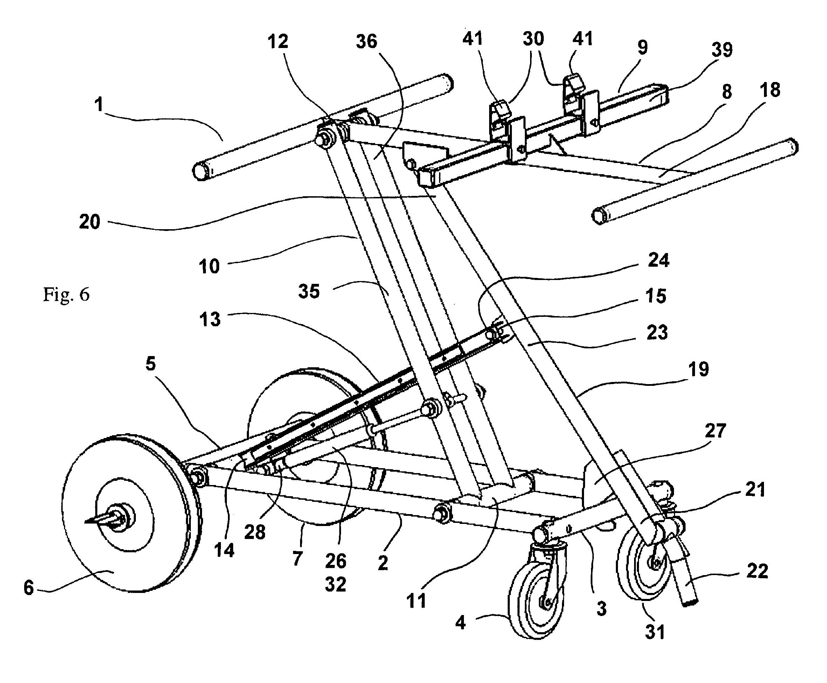

La deuxième 8 plate-forme rigide ou plateau est en outre dotée de moyens 9 de prise du véhicule en vue de permettre son levage au-dessus du sol comme représenté sur les figures 4 à 8. Ces moyens 9 de prise peuvent adopter toute forme appropriée en fonction des véhicules qui doivent être levés par le dispositif 1. Par exemple, ces moyens 9 peuvent adopter la forme d'une barre transversale 39, de préférence tubulaire, parallèle aux deux branches du H et fixée rigidement sur la barre longitudinale du H, par exemple sur la partie mobile de celle-ci par rapport à l'extrémité 16 à laquelle est fixée la bielle 10. Ainsi, la position de cette barre transversale 39 est réglable en hauteur lorsque la deuxième plate-forme 8 est en position verticale, afin de s'adapter à la longueur du châssis du véhicule à lever, et pour placer cette barre 39 à un endroit du châssis qui convient pour une fixation du châssis sur ladite barre 39. Les moyens de prise 9 du véhicule comportent en outre avantageusement une ou plusieurs attaches 30 de type clip, réparties sur la longueur de la barre transversale 39, comme représenté par exemple sur la figure 6, qui adoptent chacune une forme de U dont l'ouverture 40 possède un ressort 41 de fermeture. Une barre du châssis du véhicule (non représentée), sensiblement horizontale lorsque le véhicule est en position verticale pour une prise sur le dispositif 1, est ainsi destinée à être introduite dans les U dont les ouvertures 40 se trouvent alors tournées latéralement, comme représenté sur la figure 3, par simple roulage du dispositif 1 sur le sol, puis maintenue prisonnière à l'intérieur des U de manière élastique par les ressorts 41. Ainsi, le véhicule, de type kart ou analogue, est généralement maintenu par son châssis, les moyens 9 l'empêchant de bouger dans le sens longitudinal et de pivoter par rapport au dispositif 1, et les barres transversales du H de la deuxième 8 plate-forme assurent une stabilité du véhicule.

Le dispositif 1 de levage comprend avantageusement des axes d'articulation respectifs parallèles pour les liaisons à un degré de liberté en rotation chacune, de type liaison pivot, entre les première 10 et deuxième 13 bielles d'une part, et les première 2 et deuxième 8 plates-formes rigides d'autre part. Lorsque toutes les articulations du dispositif de levage 1 sont connectées, la deuxième plate-forme 8 en H est apte à effectuer un mouvement de basculement et d'élévation combinée, à partir d'une position verticale ou sensiblement verticale comme représenté sur les figures 2 et 3, jusqu'à une position horizontale ou sensiblement horizontale comme représenté sur les figures 4 et 5, ou une position inclinée au delà de l'horizontale (non représenté) en fonction des besoins, en prenant appui sur les deux bielles 10 et 13 qui sont croisées tout au long du mouvement, et dont le lieu de croisement se déplace des extrémités 12, 14 des bielles 10 et 13 comme représenté sur les figures 2 et 3, vers le centre desdites bielles 10 et 13, respectivement de la position verticale ou sensiblement verticale de la deuxième plate-forme 8, à la position horizontale ou sensiblement horizontale de celle-ci. Une telle cinématique permet un déplacement sensiblement linéaire du centre de gravité de l'ensemble mobile, induisant pour l'opérateur un effort sensiblement constant tout au long du mouvement.

Les articulations du dispositif 1 sont obtenues de toute manière connue, par exemple au moyen de vis et perçage de tubes, ou par tubes cylindriques emmanchés afin d'optimiser le coût de fabrication.

De manière préférentielle, pour une hauteur donnée au-dessus du sol et au-dessus de la première plate-forme 2 de la deuxième 8 plate-forme en position horizontale ou sensiblement horizontale, à longueurs de bielles égales ou à longueurs égales de première plate-forme, et lorsque les extrémités desdites bielles sont articulées sensiblement aux extrémités des plates-formes 2, 8 comme dans l'exemple représenté, les points d'articulation des bielles 10, 13 sur la première 2 plate-forme ne seront pas disposés trop au-dessus du sol, afin que le centre de gravité de l'ensemble mobile soit le plus centré possible par rapport à la base de sustentation lorsque la deuxième 8 plate-forme se trouve en position horizontale ou sensiblement horizontale au-dessus de la première 2 plate-forme.

La deuxième 8 plate-forme comprend en outre avantageusement, comme représenté sur les figures :
- une première partie 18 rigide, sensiblement allongée, articulée sur la deuxième 12 extrémité de la première bielle 10, cette première partie allongée pouvant par exemple adopter la forme en H telle que décrite plus haut, dont la barre longitudinale du H est par exemple télescopique,
- une deuxième partie 19 rigide adoptant la forme d'un bras articulé intermédiaire dont une première 20 extrémité est articulée sur la première partie 18 rigide allongée, à distance de l'articulation entre cette première partie 18 rigide allongée et la deuxième 12 extrémité de la première bielle 10, la deuxième extrémité 15 de la deuxième bielle 13 étant articulée sur ledit bras intermédiaire 19, la deuxième 21 extrémité de ce dernier, opposée à la première 20 extrémité de celui-ci, étant dotée d'un moyen 22 de manoeuvre,
- de telle sorte que le bras intermédiaire 19 puisse se déplacer entre les deux positions extrêmes suivantes :
   - une première position, dite position de repos, dans laquelle le bras intermédiaire 19 est sensiblement disposé dans le plan de la première partie rigide 18 allongée de la deuxième 8 plate-forme,
   - une deuxième position, dite position active, dans laquelle le bras intermédiaire 19 forme un angle avec la première partie rigide 18 allongée de la deuxième 8 plate-forme,
   - le déplacement du bras intermédiaire 19 de la position de repos à la position active entraînant une élévation, plus précisément une surélévation, de la deuxième 8 plate-forme par rapport à la première 2 plate-forme.

La terminologie « sensiblement allongée » pour la partie rigide 18 est utilisée par similarité aux proportions des châssis des véhicules qui doivent être levés avec le dispositif 1 décrit, qui sont en principe plus long que large. Dans le cas contraire, la partie 18 pourra simplement être qualifiée de partie rigide.

Dans le dispositif 1 représenté, on a avantageusement :
- la première partie 18 rigide allongée qui est liée à la deuxième 12 extrémité de la première bielle 10 par une liaison à un degré de liberté en rotation, et
- le bras rigide articulé intermédiaire 19 qui est lié par sa première 20 extrémité à la première partie 18 rigide allongée, par une liaison à un degré de liberté en rotation, la deuxième extrémité 15 de la deuxième bielle 13 étant liée au bras articulé intermédiaire 19 par une liaison à un degré de liberté en rotation.

De manière avantageuse, la première extrémité 20 du bras articulé intermédiaire 19, est articulée sur la première partie 18 rigide allongée dans une zone proche de l'articulation entre la première partie 18 rigide allongée et la deuxième extrémité 12 de la première bielle 10, afin de réduire le bras de levier, la deuxième extrémité 15 de la deuxième bielle 13 étant articulée sur le bras intermédiaire 19 dans une zone médiane 23 de celui-ci, comme représenté sur la figure 5. La distance séparant l'articulation entre la première partie 18 rigide allongée et la deuxième extrémité 12 de la première bielle 10, et l'articulation entre la première extrémité 20 du bras articulé intermédiaire 19 et la partie en H de la deuxième plate-forme, est fonction de la surélévation de la deuxième plate-forme que l'on souhaite obtenir à partir du mouvement du bras intermédiaire 19. Cette distance doit être compatible avec un bras de levier permettant à un opérateur d'actionner le bras intermédiaire avec sa seule force. La première extrémité 20 du bras articulé intermédiaire 19, est articulée sur la barre longitudinale de la partie en H, entre les points d'articulation de la deuxième extrémité 12 de la première bielle 10 et de la deuxième 15 extrémité de la deuxième 13 bielle sur le bras intermédiaire 19.

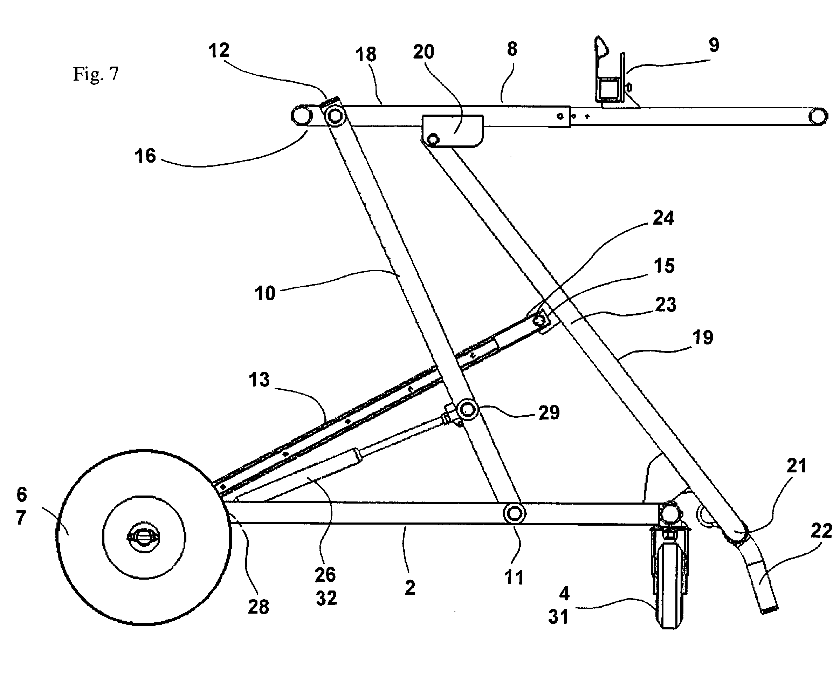

Comme plus particulièrement représenté sur la figure 5, le bras intermédiaire 19 est disposé, dans la position horizontale ou sensiblement horizontale de la deuxième 8 plate-forme, entre l'extrémité supérieure de la deuxième bielle 13 et la partie en H de la deuxième plate-forme. Ainsi, le bras intermédiaire 19 est articulé sous la barre longitudinale de la partie en H, par exemple au moyen d'une chape en forme de U fixée sous la barre longitudinale du H, et la bielle 13 est articulée sous le bras intermédiaire 19 selon tout moyen approprié en fonction de la forme de la section de la bielle 13, de sorte que, dans la position représentée sur la figure 5, lorsque le bras intermédiaire 19 est actionné vers le bas par sa poignée ou pédale de manoeuvre 22, la force pour le déplacement vers le bas du bras intermédiaire 19 étant de préférence appliquée par l'opérateur au moyen d'une de ses jambes par appui sur le moyen de manoeuvre avec un pied, le bras intermédiaire 19 repousse vers le haut la partie 18 en H en prenant appui sur la deuxième bielle 13, jusqu'à ce que l'extrémité libre 21 du bras intermédiaire 19 vienne avantageusement au contact de la première 2 plate-forme, ce qui détermine sa fin de course, comme représenté sur les figures 6 et 7. Durant le mouvement du bras intermédiaire 19, l'assiette de la partie 18 en H de la deuxième 8 plate-forme reste de préférence horizontale ou sensiblement horizontale, grâce à la liaison de la partie en H à la première bielle 10.

Les figures 6 à 8 représentent le dispositif 1 de levage en position de surélévation de la deuxième 8 plate-forme.

De manière avantageuse, le dispositif 1 représenté comprend des axes d'articulation respectifs parallèles pour les liaisons à un degré de liberté en rotation, entre le bras articulé intermédiaire 19 et la partie rigide allongée 18 en forme de H de la deuxième 8 plate-forme d'une part, et entre la deuxième extrémité 15 de la deuxième bielle 13 et le bras articulé intermédiaire 19 d'autre part. Ces axes d'articulation sont parallèles à ceux des bielles 10, 13 avec les plates-formes 2, 8, afin que la surélévation de la deuxième 8 plate-forme obtenue par la manoeuvre du bras intermédiaire 19, se fasse dans une continuité du déplacement de la deuxième 8 plate-forme de sa position verticale à sa position horizontale, soit dans un plan perpendiculaire au plan horizontal défini par la première plate-forme 2 comme expliqué plus haut.

Comme représenté sur les figures, le dispositif 1 de levage comporte de préférence des moyens de liaison libérable 27 de la deuxième extrémité 21 du bras articulé intermédiaire 19 à la première 2 plate-forme, adoptant par exemple la forme d'un crochet apte à venir s'accrocher à la barre transversale disposée à l'extrémité 3 de la première 2 plate-forme, comme représenté sur les figures 6 ou 7 plus particulièrement. Un tel crochet peut être effaçable de manière élastique lors du franchissement de la barre transversale de la première plate-forme, et libérable avec la poignée de manoeuvre 22 ensuite pour remonter le bras intermédiaire. Ces moyens 27 apportent une résistance d'ensemble supplémentaire du dispositif 1 de levage lorsque la deuxième 8 plate-forme est en position surélevée, d'autant plus utile que, dans cette position, elle est généralement chargée du poids du véhicule. En outre, ces moyens 27 sont avantageusement disposés à l'extrémité du bras intermédiaire pour minimiser les efforts de blocage du dispositif en position haute surélevée.

Le dispositif 1 peut comporter avantageusement des moyens de verrouillage du bras intermédiaire 19 le long de la partie 18 en forme de H, soit dans la position représentée sur la figure 4 ou 5, aptes à être déverrouillés par exemple avec la poignée 22 pour manoeuvrer le bras 19 vers le bas en vue de surélever la deuxième plate-forme 8. Ainsi, l'opérateur (non représenté) peut déplacer la deuxième plate-forme 8 en la manoeuvrant par la poignée 22 du bras intermédiaire 19 pour la faire passer de la position verticale ou sensiblement verticale à la position horizontale ou sensiblement horizontale et vice-versa, y compris lorsque le véhicule est attaché à la plate-forme.

Le dispositif 1 de levage représenté comporte avantageusement en outre des moyens de blocage 26 du déplacement de la deuxième 8 plate-forme par rapport à la première 2 plate-forme, dans une position quelconque de la deuxième 8 plate-forme par rapport à la première 2 plate-forme, comprise entre la position de prise du véhicule représentée sur les figures 2 ou 3, et la position de levage du véhicule, plus particulièrement dans le cas d'espèce de surélévation du véhicule, représentée sur les figures 6 à 8.

De manière préférentielle, les moyens de blocage 26 comprennent :
- des moyens de vérin 32, par exemple un vérin, dont une première extrémité 28 est articulée sur l'un des éléments suivants : première 2 plate-forme, deuxième 8 plate-forme, première 10 bielle, ou deuxième 13 bielle, par exemple et dont la deuxième extrémité 29 opposée à la première est articulée sur l'un desdits éléments ci-dessus différent de celui sur lequel est articulée la première 28 extrémité du vérin ; la première extrémité 28 du vérin 32 est par exemple articulée sur la première 2 plate-forme rigide ou l'une des bielles 10, 13, dans l'exemple sous l'extrémité inférieure 14 de la deuxième bielle 13, et la deuxième extrémité 29 du vérin 32 est par exemple articulée sur l'autre bielle 13, 10, dans l'exemple la première bielle 10 un peu au-dessus de son extrémité inférieure 11,
- une vanne d'immobilisation de la tige des moyens de vérin 32.

Il est à noter que les deux extrémités du vérin 32 peuvent être respectivement être articulées de manière alternative sur les deux bielles, ou en tout autre endroit permettant d'immobiliser la partie mobile par rapport à la première plate-forme, le choix de position étant effectué en fonction des efforts que doit assurer le vérin, afin de minimiser sa taille, et de l'espace disponible en considération des mouvements des divers éléments du dispositif 1. Le vérin 32 peut être un vérin hydraulique comportant de manière intégrée (disponible dans le commerce) ou pas, un circuit hydraulique de by-pass (non représenté) reliant les deux côtés du piston, et la vanne d'immobilisation qui est placée sur ce circuit hydraulique de by-pass. L'ouverture et la fermeture de la vanne d'immobilisation, autorise ou empêche respectivement la circulation du fluide, et donc, autorise ou empêche le déplacement de la tige du vérin 32. La vanne d'immobilisation peut se trouver de manière alternative sur le piston lui-même, par des ouvertures sur celui-ci, de tels vérins étant disponibles dans le commerce.

Le dispositif de levage 1 comprend avantageusement des moyens de commande de ladite vanne d'immobilisation, disposés de préférence sur la poignée de manoeuvre 22 du bras articulé intermédiaire 19, afin que l'opérateur puisse commander le déplacement de la plate-forme et la libération du vérin avec la même poignée 22 et de préférence la même main. Cette commande de la vanne d'immobilisation du vérin peut se faire par câble par exemple grâce à une poignée 22 pivotante. Lorsque la poignée 22 est actionnée, la vanne d'immobilisation s'ouvre et autorise la circulation d'huile dans le vérin 32 dont la tige peut alors coulisser et rend ainsi le mouvement des bielles 10, 13 possible. À l'inverse, dès que la poignée 22 est lâchée, la vanne se ferme et le vérin ne peut plus coulisser ni dans une direction, ni dans l'autre, et le mouvement des bielles 10, 13, et par voie de conséquence, de la deuxième 8 plate-forme, est bloqué.

Il est à noter que la poignée 22 peut en fait être un organe que l'on commande avec le pied, notamment dans une zone basse proche du verrouillage sur la plate-forme 2.

Les moyens de blocage du déplacement de la deuxième 8 plate-forme par rapport à la première 2 plate-forme, peuvent être constitués par tout autre moyen connu approprié, par exemple des moyens d'immobilisation agissant au niveau d'une ou plusieurs des articulations bielles-plates-formes, ou une tige télescopique à longueur variable et verrouillable dans une position quelconque, etc ... En particulier, ces moyens de blocage peuvent être constitués :
- d'une crémaillère (non représentée) par exemple articulée par une liaison rotative sur la première plate-forme 2, notamment dans une zone voisine de l'extrémité inférieure 14 de la deuxième bielle 13, ou de manière confondue avec l'axe d'articulation de cette dernière, la crémaillère s'étendant de manière rectiligne,
- d'un pion de blocage (non représenté) de la crémaillère, par exemple en acier fixé sensiblement au centre de la première bielle 10 et sur lequel chacun des crans de la crémaillère vient successivement s'emboîter, tout au long du déplacement de la deuxième plate-forme, et
- d'une commande par pédale agissant par exemple sur un levier rotatif (non représentés), notamment un levier articulé sur la première bielle 10 ou sur ledit pion destiné à être en prise sur la crémaillère, et dont une partie de levier comporte un moyen d'appui sur cette dernière afin de permettre un dégagement du pion de blocage. La pédale est connectée au levier rotatif par un système de tringles, approprié de telle sorte qu'en appuyant sur la pédale, le levier rotatif tourne et dégage la crémaillère du pion, entraînant ainsi une liberté de mouvement d'une plate-forme par rapport à l'autre, et qu'en relâchant la pédale, le levier ne soit plus en prise sur la crémaillère afin que celle-ci se bloque sur le pion, par exemple par gravité ou par rappel élastique, selon la position désirée de la deuxième 8 plate-forme.

Le dispositif de levage 1 comporte en outre de préférence des moyens de libération 24 de l'une des liaisons articulées des extrémités 11, 12, 14, 15 des première 10 ou deuxième 13 bielles à la première 2 ou deuxième 8 plate-forme, permettant une libération de cette liaison en vue d'un alignement des première 2 et deuxième 8 plates-formes sensiblement dans un même plan, comme représenté sur la figure 1. Ces moyens de libération 24 peuvent par exemple être constitués par une articulation aisément démontable, de type goupille ou analogue, et être placé au niveau de l'articulation de l'extrémité 15 de la deuxième 13 bielle, comme représenté sur la figure 1. Sur la figure 1, le dispositif affaissé présente un encombrement minimal, l'ensemble des plates-formes 2, 8 et bielles 10, 13 se trouvant sensiblement dans un même plan, définissant une hauteur d'encombrement du dispositif 1 ainsi plié sensiblement égale à la hauteur des grandes roues 6, 7. Le dispositif de levage ainsi plié peut être stocké en position quasi verticale, offrant un gain de surface au sol occupée.

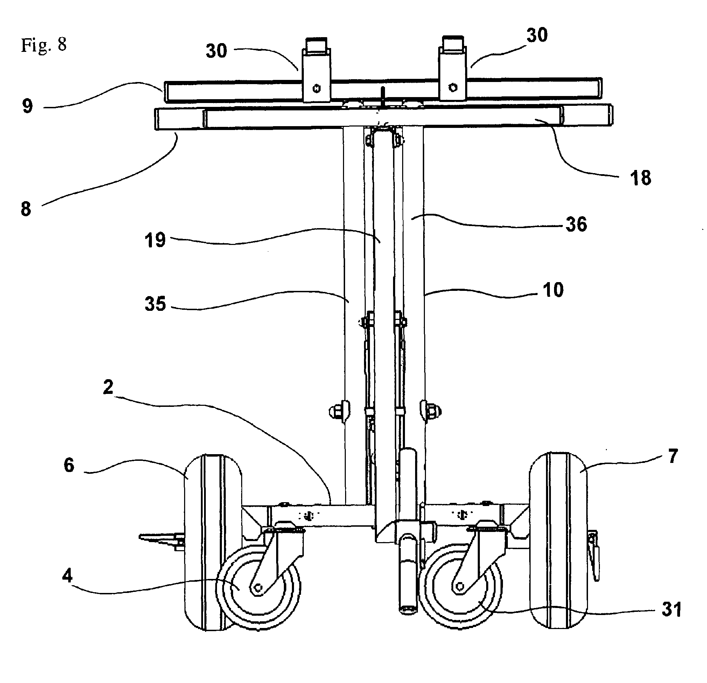

Le dispositif 1 de levage représenté présente, grâce à son système de bielles centrales, un espace libre important de part et d'autre des bielles, comme par exemple illustré sur la figure 8, pour qu'un opérateur puisse se déplacer librement dans toute zone d'intervention du véhicule. En outre, grâce aux moyens de blocage 26, l'inclinaison de la plate-forme peut être variable et bloquée dans toute position choisie par l'opérateur. Le bras intermédiaire 19 offre une possibilité de hauteur variable du plateau mobile, qui peut également être verrouillé en tout endroit grâce aux moyens de blocages 26. Les roues arrière 6, 7 de grand diamètre assurent un roulage facile du dispositif quel que soit le type de terrain, et les roues avant 4, 31 directionnelles garantissent une manoeuvre facile du dispositif même chargé.

Le fonctionnement du dispositif 1 décrit est le suivant :
- assembler le dispositif 1 s'il était rangé en position compactée ;
- le châssis du véhicule de type kart étant posé horizontalement sur le sol (avec ou sans ses roues), mettre la deuxième 8 plate-forme en position quasiment verticale après avoir libéré son mouvement, par exemple libéré les moyens de blocage 26 le cas échéant, ceci en soulevant la poignée 22 jusqu'à la verticalité ou quasi verticalité de la plate-forme mobile ;
- soulever ensuite l'avant du kart qui est la partie la plus légère de celui-ci, pour mettre en position verticale ou quasi verticale le châssis ;
- en tenant le châssis du kart d'une main dans cette position d'équilibre stable, rapprocher avec l'autre main le dispositif de levage 1 jusqu'à emboîter par clipage un des tubes du châssis de kart dans les attaches 30, ceci après avoir réglé le cas échéant la hauteur des attaches 30 ou des moyens 9, comme indiqué plus haut ;
- tirer alors vers soi l'avant du châssis de kart, en empêchant, avec un pied, le dispositif 1 de rouler au sol, puis avec la poignée 22, immobiliser le kart dans la position désirée, inclinée vers l'arrière, horizontale ou sensiblement horizontale, ou inclinée vers l'avant ;
- si nécessaire, déverrouiller la poignée 22, abaisser le bras intermédiaire 19 pour surélever le kart, puis verrouiller ce dernier ainsi que la poignée 22 pour activer les moyens de blocage 26, comme expliqué plus haut ;
- pour décharger le kart, il y a lieu de procéder aux opérations inverses.

## Revendications

1. Dispositif de levage (1) d'un véhicule de type kart ou analogue, comportant :
- une première (2) plate-forme rigide dotée de moyens (4, 6, 7) de roulement lui permettant de rouler sur le sol,
- une deuxième (8) plate-forme rigide destinée à entrer en contact avec ledit véhicule de type kart ou analogue, et dotée de moyens (9) de prise de ce dernier en vue de permettre son levage au-dessus du sol,
- des moyens de liaison cinématique (10, 13) entre les deuxième (8) et première (2) plates-formes rigides, de telle sorte que la deuxième (8) plate-forme rigide puisse se déplacer entre deux positions extrêmes par rapport à la première (2) plate-forme rigide :
- une première position, dite de prise du véhicule, dans laquelle la deuxième (8) plate-forme rigide est disposée sensiblement à la verticale, et
- une deuxième position, dite de levage du véhicule, dans laquelle la deuxième (8) plate-forme rigide est disposée au-dessus du sol et de la première plate-forme rigide, ledit dispositif de levage étant tel que lesdits moyens de liaison cinématique comprennent:
- une première (10) bielle de liaison entre les première (2) et deuxième (8) plates-formes rigides, une première (11) extrémité de la première bielle (10) étant articulée sur la première (2) plate-forme rigide, la deuxième (12) extrémité de la première bielle (10), opposée à la première (11) extrémité de celle-ci, étant articulée sur la deuxième (8) plate-forme rigide,
- une deuxième (13) bielle de liaison entre les première (2) et deuxième (8) plates-formes rigides, une première (14) extrémité de la deuxième bielle (13) étant articulée sur la première (2) plate-forme rigide, la deuxième (15) extrémité de la deuxième bielle (13), opposée à la première (14) extrémité de celle-ci, étant articulée sur la deuxième (8) plate-forme rigide,
ledit dispositif de levage étant **caractérisé en ce que** les premières (11, 14) extrémités des première (10) et deuxième (13) bielles sont articulées à distance l'une de l'autre sur la première (2) plate-forme rigide, et **en ce que** les deuxièmes (12, 15) extrémités des première (10) et deuxième (13) bielles sont articulées à distance l'une de l'autre sur la deuxième (8) plate-forme rigide de telle sorte que, dans la deuxième position de cette dernière, ou position de levage, les première (10) et deuxième (13) bielles se croisent.

2. Dispositif de levage (1) selon la revendication 1, ***caractérisé en ce que** :*
- la première (10) bielle est articulée sur les première (2) et deuxième (8) plates-formes rigides respectivement par une première et une deuxième liaisons à un degré de liberté en rotation chacune, et **en ce que**
- la deuxième (13) bielle est articulée sur les première (2) et deuxième (8) plates-formes rigides respectivement par une première et une deuxième liaisons à un degré de liberté en rotation chacune.

3. Dispositif de levage (1) selon la revendication 1 ou 2, ***caractérisé en ce que** :*
- les premières (11, 14) extrémités des première (10) et deuxième (13) bielles sont liées à la première plate-forme rigide, respectivement dans des zones d'extrémités (3, 5) opposées de celle-ci, proches des moyens de roulement, et **en ce que**
- les deuxièmes (12, 15) extrémités des première (10) et deuxième (13) bielles sont liées à la deuxième (8) plate-forme rigide, respectivement dans des zones d'extrémités (16, 17) opposées de celle-ci.

4. Dispositif de levage (1) selon la revendication 2, ou la revendication 3 lorsqu'elle dépend de la revendication 2, ***caractérisé en ce qu'**il* comprend des axes d'articulation respectifs parallèles pour les liaisons à un degré de liberté en rotation chacune, entre les première (10) et deuxième (13) bielles d'une part, et les première (2) et deuxième (8) plates-formes rigides d'autre part.

5. Dispositif de levage (1) selon l'une quelconque des revendications 1 à 4, ***caractérisé en ce que*** la deuxième (8) plate-forme comprend :
- une première partie (18) rigide articulée sur la deuxième (12) extrémité de la première bielle (10),
- une deuxième partie (19) rigide adoptant la forme d'un bras articulé intermédiaire, dont une première (20) extrémité est articulée sur ladite première partie (18) rigide, à distance de l'articulation entre cette première partie (18) rigide et la deuxième (12) extrémité de la première bielle (10), la deuxième extrémité (15) de la deuxième bielle (13) étant articulée sur ledit bras intermédiaire (19), la deuxième (21) extrémité de ce dernier, opposée à la première (20) extrémité de celui-ci, étant dotée d'un moyen (22) de manoeuvre,
- de telle sorte que le bras intermédiaire (19) puisse se déplacer entre les deux positions extrêmes suivantes :
- une première position, dite position de repos, dans laquelle le bras intermédiaire (19) est sensiblement disposé dans le plan de la première partie rigide (18) de la deuxième (8) plate-forme,
- une deuxième position, dite position active, dans laquelle le bras intermédiaire (19) forme un angle avec la première partie rigide (18) de la deuxième (8) plate-forme,
- le déplacement du bras intermédiaire (19) de la position de repos à la position active entraînant une élévation de la deuxième (8) plate-forme par rapport à la première (2) plate-forme.

6. Dispositif de levage (1) selon la revendication 5, ***caractérisé en ce que** :*
- la première partie (18) rigide est liée à la deuxième (12) extrémité de la première bielle (10) par une liaison à un degré de liberté en rotation,
- le bras rigide articulé intermédiaire (19) est lié par sa première (20) extrémité à ladite première partie (18) rigide allongée, par une liaison à un degré de liberté en rotation, la deuxième extrémité (15) de la deuxième bielle (13) étant liée au bras articulé intermédiaire (19) par une liaison à un degré de liberté en rotation.

7. Dispositif de levage (1) selon la revendication 5 ou 6, ***caractérisé en ce que*** la première extrémité (20) du bras articulé intermédiaire (19), est articulée sur la première partie (18) rigide dans une zone proche de l'articulation entre la première partie (18) rigide et la deuxième extrémité (12) de la première bielle (10), la deuxième extrémité (15) de la deuxième bielle (13) étant articulée sur le bras intermédiaire (19) dans une zone médiane (23) de celui-ci.

8. Dispositif de levage (1) selon la revendication 6, ou la revendication 7 lorsqu'elle dépend de la revendication 6, ***caractérisé en ce qu'**il* comprend des axes d'articulation respectifs parallèles pour les liaisons à un degré de liberté en rotation, entre le bras articulé intermédiaire (19) et la première partie rigide (18) de la deuxième (8) plate-forme d'une part, et entre la deuxième extrémité (15) de la deuxième bielle (13) et le bras articulé intermédiaire (19) d'autre part.

9. Dispositif de levage (1) selon l'une quelconque des revendications 5 à 8, ***caractérisé en ce qu'**il* comporte des moyens de liaison libérable (27) de la deuxième extrémité (21) du bras articulé intermédiaire (19) à la première (2) plate-forme.

10. Dispositif de levage (1) selon l'une quelconque des revendications 1 à 9, ***caractérisé en ce qu'**il* comporte des moyens de libération (24) de l'une des liaisons articulées des extrémités (11, 12, 14, 15) des première (10) ou deuxième (13) bielles à la première (2) ou deuxième (8) plate-forme, permettant une libération de cette liaison en vue d'un alignement des première (2) et deuxième (8) plates-formes sensiblement dans un même plan.

11. Dispositif de levage (1) selon l'une quelconque des revendications 1 à 10, ***caractérisé en ce qu'**il* comporte des moyens de blocage (26) du déplacement de la deuxième (8) plate-forme par rapport à la première (2) plate-forme, dans une position quelconque de la deuxième plate-forme par rapport à la première plate-forme, comprise entre la position de prise et la position de levage du véhicule.

12. Dispositif de levage (1) selon la revendication 11, ***caractérisé en ce que*** lesdits moyens de blocage (26) comprennent :
- des moyens de vérin (32) dont une première extrémité (28) est articulée sur l'un des éléments suivants : première (2) plate-forme, deuxième (8) plate-forme, première (10) bielle, ou deuxième (13) bielle, et dont la deuxième extrémité (29) opposée à la première est articulée sur l'un desdits éléments ci-dessus différent de celui sur lequel est articulée la première (28) extrémité du vérin.
- une vanne d'immobilisation de la tige des moyens de vérin (32).

13. Dispositif de levage (1) selon les revendications 5 et 12, *caractérisé en ce qu*'il comprend des moyens de commande de ladite vanne d'immobilisation, disposés sur la poignée de manoeuvre (22) du bras articulé intermédiaire (19).

14. Dispositif de levage (1) selon l'une quelconque des revendications 1 à 13, ***caractérisé en ce que*** les première (2) et deuxième (8) plates-formes, les première (10) et deuxième (13) bielles au moins, adoptent des structures tubulaires.

15. Dispositif de levage (1) selon l'une quelconque des revendications 1 à 14, ***caractérisé en ce que*** lesdits moyens de roulement de la première (2) plate-forme rigide comprennent :
- une première (4) roue disposée à une première (3) extrémité de la première plate-forme rigide,
- une deuxième (6) roue disposée à une deuxième (5) extrémité de la première (2) plate-forme rigide, opposée à la première (3) extrémité, et
- au moins une troisième (7) roue, disposée à l'une des première (3) ou deuxième (5) extrémité de la première plate-forme rigide,
- la ou les roues disposées à l'une ou l'autre des deux extrémités (3, 5) de la première (2) plate-forme rigide étant directionnelle.

16. Dispositif de levage (1) selon l'une quelconque des revendications 1 à 15, ***caractérisé en ce que*** les moyens de roulement comportent quatre roues (4, 6, 7, 31) dont deux (4, 31) directionnelles.

17. Dispositif de levage (1) selon l'une quelconque des revendications 1 à 16, ***caractérisé en ce que*** la deuxième (8) plate-forme adopte une forme en H.

18. Dispositif de levage (1) selon l'une quelconque des revendications 1 à 17, ***caractérisé en ce que*** les moyens de prise (9) du véhicule comporte au moins une attache (30) de type clip.

## Claims

1. Device (1) for lifting a vehicle of kart or analogous type, including:
- a first rigid platform (2) provided with rolling means (4, 6, 7) enabling it to roll on the ground,
- a second rigid platform (8) intended to enter into contact with said vehicle of kart or analogous type, and provided with means (9) for holding the latter with a view to enabling it to be lifted above the ground,
- kinematic connecting means (10, 13) between the second rigid platform (8) and the first rigid platform (2) such that the second rigid platform (8) may be moved between two extreme positions relative to the first rigid platform (2):
- a first position, called the vehicle holding position, in which the second rigid platform (8) is disposed substantially vertically, and
- a second position, called the vehicle lifting position, in which the second rigid platform (8) is disposed above the ground and the first rigid platform, said lifting device being such that said kinematic connecting means comprise:
- a first connecting link (10) between the first rigid platform (2) and the second rigid platform (8), a first end (11) of the first link (10) being articulated to the first rigid platform (2), the second end (12) of the first link (10), opposite the first end (11) thereof, being articulated to the second rigid platform (8),
- a second connecting link (13) between the first rigid platform (2) and the second rigid platform (8), a first end (14) of the second link (13) being articulated to the first rigid platform (2), the second end (15) of the second link (13), opposite the first end (14) thereof, being articulated to the second rigid platform (8),
said lifting device being **characterized in that** the first ends (11, 14) of the first link (10) and the second link (13) are articulated to the first rigid platform (2) at a distance from each other, and **in that** the second ends (12, 15) of the first link (10) and the second link (13) are articulated to the second rigid platform (8) at a distance from each other so that, in the second position of the latter, or lifting position, the first link (10) and the second link (13) cross over.

2. Lifting device (1) according to Claim 1, **characterized in that**:
- the first link (10) is articulated to the first rigid platform (2) and the second rigid platform (8) by respective first and second connections each having a degree of freedom in rotation, and **in that**:
- the second link (13) is articulated to the first rigid platform (2) and the second rigid platform (8) by respective first and second connections each having a degree of freedom in rotation.

3. Lifting device (1) according to Claim 1 or 2, **characterized in that**:
- the first ends (11, 14) of the first link (10) and the second link (13) are connected to the first rigid platform in respective opposite end areas (3, 5) thereof, close to the rolling means, and **in that**:
- the second ends (12, 15) of the first link (10) and the second link (13) are connected to the second rigid platform (8) in respective opposite end areas (16, 17) thereof.

4. Lifting device (1) according to Claim 2, or Claim 3 when dependent on Claim 2, **characterized in that** it comprises, between the first link (10) and the second link (13), on the one hand, and the first rigid platform (2) and the second rigid platform (8), on the other hand, respective parallel articulation axes for the connections each having a degree of freedom in rotation.

5. Lifting device (1) according to any one of Claims 1 to 4, **characterized in that** the second platform (8) comprises:
- a first rigid part (18) articulated to the second end (12) of the first link (10),
- a second rigid part (19) taking the form of an intermediate articulated arm, a first end (20) of which is articulated to said rigid part (18), at a distance from the articulation between this first rigid part (18) and the second end (12) of the first link (10), the second end (15) of the second link (13) being articulated to said intermediate arm (19), the second end (21) of the latter, opposite the first end (20) thereof, being provided with manoeuvring means (22),
- such that the intermediate arm (19) may be moved between the following two extreme positions:
- a first position, called the rest position, in which the intermediate arm (19) is disposed substantially in the plane of the first rigid part (18) of the second platform (8),
- a second position, called the active position, in which the intermediate arm (19) is at an angle to the first rigid part (18) of the second platform (8),
- the movement of the intermediate arm (19) from the rest position to the active position elevating the second platform (8) relative to the first platform (2).

6. Lifting device (1) according to Claim 5, **characterized in that**:
- the first rigid part (18) is connected to the second end (12) of the first link (10) by a connection with a degree of freedom in rotation,
- the intermediate articulated rigid arm (19) is connected by its first end (20) to said first elongate rigid part (18), by a connection having a degree of freedom in rotation, the second end (15) of the second link (13) being connected to the intermediate articulated arm (19) by a connection having a degree of freedom in rotation.

7. Lifting device (1) according to Claim 5 or 6, **characterized in that** the first end (20) of the intermediate articulated arm (19) is articulated to the first rigid part (18) in an area close to the articulation between the first rigid part (18) and the second end (12) of the first link (10), the second end (15) of the second link (13) being articulated to the intermediate arm (19) in a median area (23) thereof.

8. Lifting device (1) according to Claim 6, or Claim 7 when dependent on Claim 6, **characterized in that** it comprises respective parallel articulation axes for the connections having a degree of freedom in rotation, between the intermediate articulated arm (19) and the first rigid part (18) of the second platform (8), on the one hand, and between the second end (15) of the second link (13) and the intermediate articulated arm (19), on the other hand.

9. Lifting device (1) according to any one of Claims 5 to 8, **characterized in that** it includes releasable means (27) for connecting the second arm (21) of the intermediate articulated arm (19) to the first platform (2).

10. Lifting device (1) according to any one of Claims 1 to 9, **characterized in that** it includes means (24) for releasing one of the articulated connections from the ends (11, 12, 14, 15) of the first link (10) or the second link (13) to the first platform (2) or the second platform (8), enabling release of that connection with a view to alignment of the first platform (2) and the second platform (8) in substantially the same plane.

11. Lifting device (1) according to any one of Claims 1 to 10, **characterized in that** it includes means (26) for blocking movement of the second platform (8) relative to the first platform (2), in any position of the second platform relative to the first platform, including between the holding position and the vehicle lifting position.

12. Lifting device (1) according to Claim 11, **characterized in that** said locking means (26) comprise:
- actuator means (32) of which a first end (28) is articulated to one of the following elements: first platform (2), second platform (8), first link (10), or second link (13), and of which the second end (29) opposite the first is articulated to one of said above elements other than that to which the first end (28) of the actuator is articulated,
- a valve for immobilizing the rod of the actuator means (32).

13. Lifting device (1) according to Claims 5 and 12, **characterized in that** it comprises control means of said immobilization valve disposed on the manoeuvring handle (22) of the intermediate articulated arm (19).

14. Lifting device (1) according to any one of Claims 1 to 13, **characterized in that** the first platform (2) and the second platform (8), the first link (10) and the second link (13) at least, have tubular structures.

15. Lifting device (1) according to any one of Claims 1 to 14, **characterized in that** said rolling means of the first rigid platform (2) comprise:
- a first wheel (4) disposed at a first end (3) of the first rigid platform,
- a second wheel (6) disposed at a second end (5) of the first rigid platform (2), opposite the first end (3), and
- at least one third wheel (7), disposed at either the first end (3) or the second end (5) of the first rigid platform,
- the wheel or wheels disposed at one or the other of the two ends (3, 5) of the first rigid platform (2) being steerable.

16. Lifting device (1) according to any one of Claims 1 to 15, **characterized in that** the rolling means include four wheels (4, 6, 7, 31) of which two (4, 31) are steerable.

17. Lifting device (1) according to any one of Claims 1 to 16, **characterized in that** the second platform (8) is H-shaped.

18. Lifting device (1) according to any one of Claims 1 to 17, **characterized in that** the vehicle holding means (9) include at least one clip type attachment (30).

## Patentansprüche

1. Hebevorrichtung (1) zum Anheben eines Fahrzeugs vom Typ Go-Kart oder dergleichen, enthaltend:
- eine erste starre Plattform (2), die mit Fahrmitteln (4, 6, 7) ausgestattet ist, die es ihr gestatten, auf dem Boden zu fahren,
- eine zweite starre Plattform (8), die dazu bestimmt ist, mit dem Go-Kart-artigen Fahrzeug oder dergleichen in Kontakt zu treten und die mit Aufnahmemitteln (9) zum Aufnehmen des letztgenannten versehen ist, um dessen Anheben über dem Boden zu gestatten,
- Verbindungsmittel (10, 13) zur kinematischen Verbindung zwischen der zweiten (8) und ersten (2) starren Plattform, derart, dass die zweite starre Plattform (8) sich zwischen zwei Endstellungen bezüglich der ersten starren Plattform (2) verlagern kann, nämlich
- einer ersten Stellung, Fahrzeugaufnahmestellung genannt, in welcher die zweite starre Plattform (8) im wesentlichen senkrecht angeordnet ist, und
- einer zweiten Stellung, Fahrzeughebestellung genannt, in welcher die zweite starre Plattform (8) über dem Boden und der ersten starren Plattform angeordnet ist, wobei die Hebevorrichtung derart ist, dass die kinematischen Verbindungsmittel aufweisen:
- eine erste Verbindungsstange (10) zur Verbindung zwischen der ersten (2) und der zweiten (8) starren Plattform, wobei ein erstes Ende (11) der ersten Stange (10) an der ersten starren Plattform (2) angelenkt ist und das dem ersten Ende (11) der ersten Stange (10) entgegengesetzte zweite Ende (12) derselben an der zweiten starren Plattform (8) angelenkt ist,
- eine zweite Verbindungsstange (13) zur Verbindung zwischen der ersten (2) und der zweiten (8) starren Plattform, wobei ein erstes Ende (14) der zweiten Stange (13) an der ersten starren Plattform (2) angelenkt ist und das dem ersten Ende (14) der zweiten Stange (13) entgegengesetzte zweite Ende (15) derselben an der zweiten starren Plattform (8) angelenkt ist, wobei die Hebevorrichtung **dadurch gekennzeichnet ist, dass** die ersten Enden (11, 14) der ersten (10) und der zweiten (13) Stange in Entfernung voneinander an der ersten starren Plattform (2) angelenkt sind und dass die zweiten Enden (12, 15) der ersten (10) und der zweiten (13) Stange in Entfernung voneinander an der zweiten Plattform (8) angelenkt sind, so dass in der zweiten Stellung der letztgenannten bzw. in deren Hebestellung die erste (10) und die zweite (13) Stange sich kreuzen.

2. Hebevorrichtung (1) nach Anspruch 1, **dadurch gekennzeichnet, dass**
- die erste Stange (10) an der ersten (2) und der zweiten (8) starren Plattform über eine erste bzw. zweite Verbindung jeweils mit einem Drehfreiheitsgrad angelenkt ist, und dass
- die zweite Stange (13) an der ersten (2) und der zweiten (8) starren Plattform über eine erste bzw. zweite Verbindung jeweils mit einem Drehfreiheitsgrad angelenkt ist.

3. Hebevorrichtung (1) nach Anspruch 1 oder 2, **dadurch gekennzeichnet, dass**
- die ersten Enden (11, 14) der ersten (10) und der zweiten (13) Stange mit der ersten starren Plattform in jeweiligen Endbereichen (3, 5) verbunden sind, die dieser entgegengesetzt sind und nahe bei den Fahrmitteln liegen, und dass
- die zweiten Enden (12, 15) der ersten (10) und der zweiten (13) Stange mit der zweiten starren Plattform (8) in jeweiligen Endbereichen (16, 17) verbunden sind, die dieser entgegengesetzt sind.

4. Hebevorrichtung (1) nach Anspruch 2 oder Anspruch 3 abhängig von Anspruch 2, **dadurch gekennzeichnet, dass** sie jeweilige, parallel verlaufende Gelenkachsen für die Verbindungen jeweils mit einem Drehfreiheitsgrad zwischen der ersten (10) und der zweiten (13) Stange einerseits und der ersten (2) und der zweiten (8) starren Plattform andererseits aufweist.

5. Hebevorrichtung (1) nach einem der Ansprüche 1 bis 4, **dadurch gekennzeichnet, dass** die zweite Plattform (8) aufweist:
- einen ersten starren Abschnitt (18), der an dem zweiten Ende (12) der ersten Stange (10) angelenkt ist,
- einen zweiten starren Abschnitt (19), der die Form eines Gelenk-Zwischenarms annimmt, von dem ein erstes Ende (20) an dem ersten starren Abschnitt (18) in Entfernung von der Anlenkung zwischen diesem ersten starren Abschnitt (18) und dem zweiten Ende (12) der ersten Stange (10) angelenkt ist, wobei das zweite Ende (15) der zweiten Stange (13) an dem Zwischenarm (19) angelenkt ist und das dem ersten Ende (20) des letztgenannten entgegengesetzte zweite Ende (21) desselben mit einem Betätigungsmittel (22) versehen ist,
- derart, dass der Zwischenarm (19) sich zwischen den beiden nachfolgenden Endstellungen verlagern kann, nämlich
- einer ersten Stellung, Ruhestellung genannt, in welcher der Zwischenarm (19) im wesentlichen in der Ebene des ersten starren Abschnitts (18) der zweiten Plattform (8) angeordnet ist,
- einer zweiten Stellung, Aktivstellung genannt, in welcher der Zwischenarm (19) einen Winkel mit dem ersten starren Abschnitt (18) der zweiten Plattform (8) einschließt,
- wobei die Verlagerung des Zwischenarms (19) aus der Ruhestellung in die Aktivstellung ein Anheben der zweiten Plattform (8) bezüglich der ersten Plattform (2) bewirkt.

6. Hebevorrichtung (1) nach Anspruch 5, **dadurch gekennzeichnet, dass**
- der erste starre Abschnitt (18) über eine Verbindung mit einem Drehfreiheitsgrad mit dem zweiten Ende (12) der ersten Stange (10) verbunden ist,
- der starre Gelenk-Zwischenarm (19) an seinem ersten Ende (20) über eine Verbindung mit einem Drehfreiheitsgrad mit dem langgestreckten starren ersten Abschnitt (18) verbunden ist, wobei das zweite Ende (15) der zweiten Stange (13) über eine Verbindung mit einem Drehfreiheitsgrad mit dem Gelenk-Zwischenarm (19) verbunden ist.

7. Hebevorrichtung (1) nach Anspruch 5 oder 6, **dadurch gekennzeichnet, dass** das erste Ende (20) des Gelenk-Zwischenarms (19) an dem ersten starren Abschnitt (18) in einem Bereich nahe bei der Anlenkung zwischen dem ersten starren Abschnitt (18) und dem zweiten Ende (12) der ersten Stange (10) angelenkt ist, wobei das zweite Ende (15) der zweiten Stange (13) an dem Zwischenarm (19) in einem Mittelbereich (23) desselben angelenkt ist.

8. Hebevorrichtung (1) nach Anspruch 6 oder Anspruch 7 abhängig von Anspruch 6, **dadurch gekennzeichnet, dass** sie jeweilige, parallel verlaufende Gelenkachsen für die Verbindungen mit einem Drehfreiheitsgrad zwischen dem Gelenk-Zwischenarm (19) und dem ersten starren Abschnitt (18) der zweiten Plattform (8) einerseits und zwischen dem zweiten Ende (15) der zweiten Stange (13) und dem Gelenk-Zwischenarm (19) andererseits aufweist.

9. Hebevorrichtung (1) nach einem der Ansprüche 5 bis 8, **dadurch gekennzeichnet, dass** sie lösbare Verbindungsmittel (27) zur Verbindung des zweiten Endes (21) des Gelenk-Zwischenarms (19) mit der ersten Plattform (2) aufweist.

10. Hebevorrichtung (1) nach einem der Ansprüche 1 bis 9, **dadurch gekennzeichnet, dass** sie Freigabemittel (24) zum Lösen der einen Gelenkverbindung der Enden (11, 12, 14, 15) der ersten (10) bzw. zweiten Stange (13) mit der ersten (2) bzw. zweiten (8) Plattform aufweist, wodurch ein Lösen dieser Verbindung zum Ausrichten der ersten (2) und der zweiten (8) Plattform im wesentlichen in einer gleichen Ebene möglich ist.

11. Hebevorrichtung (1) nach einem der Ansprüche 1 bis 10, **dadurch gekennzeichnet, dass** sie Sperrmittel (26) zum Sperren der Verlagerung der zweiten Plattform (8) bezüglich der ersten Plattform (2) in einer beliebigen Stellung der zweiten Plattform bezüglich der ersten Plattform aufweist, die zwischen der Aufnahmestellung und der Hebestellung des Fahrzeugs liegt.

12. Hebevorrichtung (1) nach Anspruch 11, **dadurch gekennzeichnet, dass** die Sperrmittel (26) aufweisen:
- Kraftzylindermittel (32), von denen ein erstes Ende (28) an einem der nachfolgenden Elemente angelenkt ist: erste Plattform (2), zweite Plattform (8), erste Stange (10) oder zweite Stange (13), und von denen das zweite Ende (29), das dem ersten entgegengesetzt ist, an einem der oben genannten Elemente angelenkt ist, das sich von demjenigen unterscheidet, an dem das erste Ende (28) des Kraftzylinders angelenkt ist,
- ein Halteventil zum Festhalten der Stange der Kraftzylindermittel (32).

13. Hebevorrichtung (1) nach den Ansprüchen 5 und 12, **dadurch gekennzeichnet, dass** sie Steuermittel zum Steuern des Halteventils aufweist, die am Betätigungsgriff (22) des Gelenk-Zwischenarms (19) angeordnet sind.

14. Hebevorrichtung (1) nach einem der Ansprüche 1 bis 13, **dadurch gekennzeichnet, dass** zumindest die erste (2) und die zweite (8) Plattform sowie die erste (10) und die zweite (13) Stange rohrförmige Strukturen annehmen.

15. Hebevorrichtung (1) nach einem der Ansprüche 1 bis 14, **dadurch gekennzeichnet, dass** die Fahrmittel der ersten starren Plattform (2) aufweisen:
- ein erstes Rad (4), das an einem ersten Ende (3) der ersten starren Plattform angeordnet ist,
- ein zweites Rad (6), das an einem dem ersten Ende (3) entgegengesetzten zweiten Ende (5) der ersten starren Plattform angeordnet ist,
- zumindest ein drittes Rad (7), das an dem einen Ende, nämlich dem ersten (3) oder dem zweiten (5) Ende, der ersten starren Plattform angeordnet ist,
- wobei das bzw. die Räder, die an dem einen oder anderen der beiden Enden (3, 5) der ersten starren Plattform (2) angeordnet sind, lenkbare Räder sind.

16. Hebevorrichtung (1) nach einem der Ansprüche 1 bis 15, **dadurch gekennzeichnet, dass** die Fahrmittel vier Räder (4, 6, 7, 31) aufweisen, von denen zwei (4, 31) lenkbar sind.

17. Hebevorrichtung (1) nach einem der Ansprüche 1 bis 16, **dadurch gekennzeichnet, dass** die zweite Plattform (8) eine H-Form annimmt.

18. Hebevorrichtung (1) nach einem der Ansprüche 1 bis 17, **dadurch gekennzeichnet, dass** die Aufnahmemittel (9) zum Aufnehmen des Fahrzeugs zumindest einen Clip-artigen Verbinder (30) aufweisen.
